Europäisches Patentamt

European Patent Office

Office européen des brevets

(11) Publication number: **0 390 286**
**A1**

## (12) EUROPEAN PATENT APPLICATION

(21) Application number: **90200741.8**

(22) Date of filing: **28.03.90**

(51) Int. Cl.⁵: **A23B 4/12, A23L 3/34, A23L 1/318**

(30) Priority: **30.03.89 NL 8900778**

(43) Date of publication of application:
**03.10.90 Bulletin 90/40**

(84) Designated Contracting States:
**DE DK GB NL**

(71) Applicant: **M. FIERET'S ZEEVISHANDEL B.V.**
**Valkseweg 85**
**NL-3771 RD Barneveld(NL)**

(72) Inventor: **Fieret, Maarten**
**Hoofdweg 152**
**NL-6744 WJ Ederveen(NL)**

(74) Representative: **Kooy, Leendert Willem et al**
**OCTROOIBUREAU VRIESENDORP & GAADE**
**P.O. Box 266**
**NL-2501 AW The Hague(NL)**

(54) **Process and device for treating a foodstuff with a liquid.**

(57) Process for treating a foodstuff with a liquid, in particular for marinating herring in vinegar, wherein the foodstuff plus the treating liquid are introduced into a barrel (9) and the barrel (9) is subsequently rotated until the processing is completed. After being closed, a number of barrels is arranged in the same cage (3), whereafter the cage is rotated.

EP 0 390 286 A1

The present invention substantially relates to a process for treating a foodstuff with a liquid, in particular for marinating herring in vinegar, wherein the foodstuff plus the treating liquid are introduced into a barrel and the barrel is subsequently rotated until the treatment is completed.

It is known to load vinegar and herring in a rotatable barrel, whereafter the barrel is rotated during a period sufficient to expose the herring to the vinegar to a proper extent. Thereafter the contents of the barrel is transferred into a plurality of barrels to be sent to the customers.

The disadvantage of this process is that loading the barrel is time consuming and that the barrel should have a restricted contents as herring becomes rugged by vinegar, so that after a course of time it becomes increasingly difficult to move the herring with respect to each other in the vinegar, whereas this movement is yet necessary to expose the herrings sufficiently to the vinegar. Besides, time and means are necessary for unloading the barrel in that the herrings are transferred into the barrels to be sent to customers.

According to the invented process these disadvantages are removed in that after being closed, a number of barrels is arranged in the same cage, whereafter the cage is rotated.

As a result the contents of each barrel may be reduced to e.g. 29 kg of herring and 22 l. of vinegar, so that the herring after rotating the cage with the barrels for e.g. 3 or 4 minutes, is exposed sufficiently with the vinegar, and by simultaneously rotating a plurality of barrels, e.g. 18, yet per time unit a sufficiently large amount of marinated herring is made ready for delivery to the customers. In applying the invention to barrels with reduced contents which are ready for delivery to customers, the known process and device of loading of a large barrel and unloading that barrel after rotation into small barrels to be deliverd to customers, is replaced by loading immediately herring and vinegar into small barrels to be delivered to customers, followed by rotation, so that after rotation unloading is omitted, thus saving time, manpower and equipment.

Furthermore the invention provides a device for carrying out the process, wherein said device is substantially characterized by a cage rotatable about a horizontal axis by a motor with a closable entrance for receiving a plurality of barrels filled with foodstuff and treating liquid.

The enclosed sub claims 2 to 6 inclusive indicate how the invented process is preferably carried out, whereas the enclosed claims 8 to 13 inclusive indicate preferred embodiments of the invented device.

The product obtained by applying the invention is indicated in the enclosed claims 14 and 15.

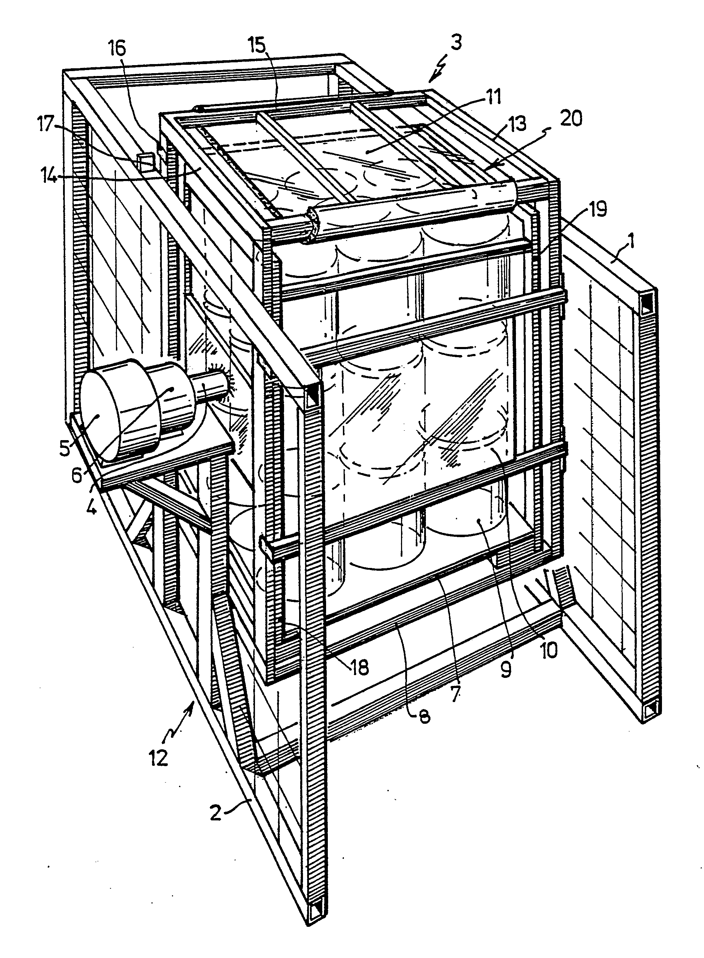

The invention will be further elucidated by the following description of an embodiment shown in the enclosed drawing showing the invented device in perspective.

As shown in the drawing, in a frame 12 with side walls 1 and 2, a cage 3 is rotatably hung via a journal 4 bearing in the side wall 2 and via a journal (not shown) bearing in the side wall 1 and extending in line with the journal 4. The side wall 1 and the journal bearing therein form the mirror image of the side wall 2 with the journal 4 bearing therein. Both journals are fixedly secured to said side walls 13 and 14, respectively of the cage 3. A motor 5 drives the journal 4 via a brake 6, so that the cage 3 rotates about the centerlines of the journal 4 and of the journal bearing in said side wall 1.

A pallet 7 may be arranged on the floor 8 of the cage 3 and is adapted to carry the stacked barrels 9 containing the foodstuff to be treated, such as herring and vinegar. In the drawn example six stacks of three barrels 9 each are arranged on said pallet, but obviously different numbers of barrels 9 can be used provided that the size of the cage 3 is adapted to the number of barrels. The cage 3 is provided with side walls 13 and 14 parallel to the frame walls 1 and 2, and with a door 10 at the front side, whereas a back wall 15 of the cage extends parallel to the door 10. The journal 4 is secured to the left side wall 14 of the cage 3, whereas the other journal (not shown) is secured to the right side wall 13 of the cage. The construction of both side walls 13 and 14, as well as the back wall 15 and the door 10 of the cage is simple to such an extent that it is imaginable for an expert even without further indication in a drawing.

In order to keep the barrels 9 in the cage 3 during rotation, the cage is provided with a top wall 11, which is positioned at such a distance from the floor 8 of the cage, that the pallet 7 with the stacked barrels 9 may be transferred into and out of the cage 3 by a fork-lift truck, the fork of which may be inserted between the pallet and the floor. The fork-lift truck is generally known per se and therefore not further described here.

The above indicated clearance results in the barrels 9 being agitated back and forward between the pallet 7 and the top wall 11 of the cage during rotation of the cage 3, which results in the herring being treated properly with vinegar.

Preferably a measuring apparatus is present to measure the number of rotations of the cage 3 by the motor 5 and consequently to stop the rotation of the cage after a plurality of rotations or a certain period of time, e.g. 3 or 4 minutes. This measuring apparatus may e.g. comprise a reflector 16 on the cage 3 and a photocell 17 on the frame wall 2.

The measuring apparatus may be constructed and be coupled to the motor 5 and the brake 6 in such a way, that the cage 3 is stopped in the position according to the drawing, so that the pallet 7 with on top the barrels 9 may be removed from the cage 3 in the most convenient way by means of e.g. a fork-lift truck.

By way of example the invented process and the invented device may be applied as follows when marinating herring. Herring and vinegar are introduced into barrels 9, preferably 29 kg of herring and 22 l. of vinegar per barrel, the barrel not being filled completely so that the herrings may be agitated in the barrel in order to be exposed properly to the vinegar. The closed, filled barrels are stacked on a pallet 7, e.g. in six piles of three barrels 9, consequently 18 barrels in all. By means of a fork-lift truck known per se the pallet 7 with the barrels 9 are moved to the invented device and placed on the floor 8 of the cage 3. By closing the door 10 the barrels 9 are locked up in the cage 3 and subsequently the cage is rotated about the journal 4 and the journal which is line therewith by the motor 5.

As a result of the rotation, the herring in the barrels is agitated through the vinegar, whereas the agitation is promoted by the clearance between the distance of the floor 8 to the top wall 11 of the cage 3 and the height of the pallet 7 with the stacks of barrels 9 on top of it. This agitation is also promoted in that the barrels are not completely filled with herring and vinegar.

After e.g. 3 or 4 minutes of rotation, the herring is sufficiently agitated through the vinegar and therefore the device with the photocell 17 and the refelector 16 is constructed in such a way, that the device stops the motor 5 in time and activates the brake 6. The cage 3 is stopped by the device 16, 17 and the brake 6 in the position at which after opening the door 10, the pallet 7 with the barrels 9 may be easily removed by a fork-lift truck.

Then the device is free to receive a following pallet 7 with barrels 9, so that about 5 tonnes of herring per hour may be treated by the device. The barrels 9 are preferably of the kind in which marinated herring can be delivered to the customers, so that transferring into other barrels is not necessary, with the result that time, manpower and equipment are saved.

Preferably the pallet 7 is also provided with posts 18 and 19, as well as cross-beams, such as the cross-beam 20 between the posts in order to keep the barrels 9 in place on the pallet during transfer by the fork-lift truck.

## Claims

1. Process for treating a foodstuff with a liquid, in particular for marinating herring in vinegar, wherein the foodstuff plus the treating liquid are introduced into a barrel and the barrel is subsequently rotated until the processing is completed, **characterized in that** after being closed, a number of barrels is arranged in the same cage, whereafter the cage is rotated.

2. Process according to claim 1, **characterized in that** barrels are used in which the processed foodstuff is also taken to the customers.

3. Process according to claim 1 or 2, **characterized in that** the barrels are each filled with liquid and foodstuff to such an extent, that as a result of the rotation the foodstuff is agitated in the liquid.

4. Process according to any of the preceding claims, **characterized in that** after being filled with the foodstuff and the liquid, the barrels are arranged on a carrier or pallet which is subsequently arranged in the mechanically rotatable cage by a fork-lift truck.

5. Process according to any of the preceding claims, **characterized in that** each barrel contains about 29 of herring and 22 liter of vinegar.

6. Process according to any of the preceding claims, **characterized in that** the carrier contains 18 barrels.

7. Device for carrying out the process according to any one of the preceding claims, **characterized by** a cage rotatable around a horizontal axis by a motor and with a closable entrance for receiving a plurality of barrels filled with foodstuff and treating liquid.

8. Device according to claim 7, **characterized by** a carrier removably arrangeable in the cage, on which the barrels are removably arranged.

9. Device according to claim 7 or 8, **characterized by** an apparatus for measuring the degree of rotation of the cage and for ending the rotation if the desired degree of rotation is reached, e.g. after 3 or 4 minutes.

10. Device according to claim 9, **characterized by** a brake belonging to the motor which is capable of stopping the cage in the position at which the barrels can be removed from the cage in the most convenient way.

11. Device according to any of claims 7 to 10, **characterized in that** the barrels are arranged in stacks extending radially to the rotation axis of the cage, the height of each stack being sufficiently smaller than the distance between the ends of the cage between which the stacks extend, to cause sufficient agitation of the barrels between those ends of the cage.

12. Device according to any of the claims 8 to 11, in that the cage is provided with two side walls, a back wall, a bottom, a top wall and a door situated opposite the back wall.

13. Device according to any of the claims 7 to 12, **characterized in that** the pallet is provided with uprights and cross-beams therein between for keeping the barrels in place, the pallet being preferably handled by a fork-lift truck.

14. Marinated herring prepared by applying the process and/or device according to any of the preceding claims or combinations thereof.

15. Barrels ready for delivery to customers, containing marinated herring prepared by applying the process and/or device according to any of the preceding claims or combinations thereof.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A- 786 079 (CONTINENTAL CAN Co.)(26-08-1935) * Figures 1-3; pages 1-4 * | 1-3 | A 23 B 4/12<br>A 23 L 3/34<br>A 23 L 1/318 |
| X | US-A-3 446 636 (E.C. KRAUS)(27-05-1969) * Columns 1-4 ; figures 1,2 * | 1-3 | |
| Y | DE-A-2 807 059 (G. MOEHLMANN)(23-08-1979) * Figures 1-3; claims 1-15; pages 8-12 * | 1-4,7 | |
| Y | US-A-3 744 402 (H.L. PIEGZA et al.)(10-07-1973) * Figures 1-4,7; column 1, lines 5-57; claims 1-6,10 * | 1-4,7 | |
| A | FR-A-1 114 466 (W. GERBIG)(12-04-1956) | | |
| A | WO-A-8 201 640 (JENSEN)(27-05-1982) * Claims 1-10; pages 5-7 * | 1-6 | TECHNICAL FIELDS SEARCHED (Int. Cl.5) |
| A | FR-A- 960 863 (CONTINENTAL CAN)(26-04-1950) | | A 23 B<br>A 23 C<br>A 23 L |
| A | EP-A-0 053 781 (R. HUBBARD et al.)(16-06-1982) * Figure 2; claims 1-12 * | 1,7 | |
| A | WO-A-8 200 081 (K.R. OPSHAUG)(21-01-1982) * Fig. 1/1; claims 1-6 * | 1,7 | |
| A | FR-A-2 096 516 (A. WEISS)(18-02-1972) -/- | | |

The present search report has been drawn up for all claims

| Place of search | Date of completion of the search | Examiner |
|---|---|---|
| THE HAGUE | 12-07-1990 | GUYON R.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A- 573 620 (F. SPANOGHE)(27-06-1924) --- | | |
| A | FR-A- 346 552 (A. GAULIN)(30-01-1905) ----- | | |
| | | | TECHNICAL FIELDS SEARCHED (Int. Cl.5) |

The present search report has been drawn up for all claims

| Place of search | Date of completion of the search | Examiner |
|---|---|---|
| THE HAGUE | 12-07-1990 | GUYON R.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P0401)